# EUROPEAN PATENT APPLICATION

(11) **EP 3 855 362 A1**
(43) Date of publication of application: **28.07.2021**
(21) Application number: 19861877.9
(22) Date of filing: 19.09.2019
(51) Int. Cl.: G06N 3/04

(54) **CONVOLUTION PROCESSING METHOD, APPARATUS, AND STORAGE MEDIUM OF CONVOLUTIONAL NEURAL NETWORK**

(30) Priority: 20.09.2018 CN 201811103473
(71) Applicant: ZTE Corporation, Shenzhen, Guangdong 518057 (CN)
(72) Inventor: YAN, Shengnan, Shenzhen, Guangdong 518057 (CN); WANG, Fan, Shenzhen, Guangdong 518057 (CN); YU, Jinqing, Shenzhen, Guangdong 518057 (CN); ZHU, Jianping, Shenzhen, Guangdong 518057 (CN)
(74) Representative: Deambrogi, Edgardo
(86) International application number: PCT/CN2019/106649
(87) International publication number: WO 2020/057593

(57) **Abstract**

A convolution processing method and apparatus for a convolutional neural network, and a storage medium are provided. The method includes that: weight values in a sub convolution kernel in the convolutional neural network are classified; for each of the weight values, an indicator storing a corresponding operation to be executed on data and an address representing the weight value are generated according to a classification result of the corresponding weight value; corresponding to-be-processed data is acquired according to the address of the weight value; and a convolution operation is executed on the to-be-processed data according to the indicator to obtain a convolution result.

## Description

### Technical Field

Embodiments of the disclosure relate to neural-network-based deep learning technologies, and particularly, but not limited, to a convolution processing method and apparatus for a convolutional neural network, and a storage medium.

### Background

In an existing art, artificial intelligence technologies are developed worldwide rapidly. In the industry, a lot of effort is put to develop researches on the artificial intelligence technologies, and remarkable results are achieved. Particularly in aspects of image detection and recognition, language recognition and the like, artificial intelligence has achieved higher recognition rate than humans.

Meanwhile, scales of neural networks keep growing, and a typical neural network at least includes dozens or even hundreds of layers and hundreds of millions of connections between neurons. With the constant improvement of performance indexes of algorithms, the calculation burden also keeps increasing, and longer time is required to complete the inferencing.

However, during practical applications, under such a heavy calculation burden, not all calculations are effective. For points of which weights are zero after fixed-point processing or sparsification of the algorithm, namely after compression, pruning or clustering, etc. is performed on the algorithm by training, calculations are not required during a practical operation.

For the problem in the existing art, there is yet no effective solution at present.

### Summary

The embodiments of the disclosure provide a convolution processing method and apparatus for a convolutional neural network, and a storage medium.

The technical solutions of the embodiments of the disclosure are implemented as follows.

According to a first aspect, the embodiments of the disclosure provide a convolution processing method for a convolutional neural network, which may include the following operations.

Weight values in a sub convolution kernel in the convolutional neural network are classified.

For each of the weight values, an indicator storing a corresponding operation to be executed on data and an address representing the weight value are generated according to a classification result of the corresponding weight value.

Corresponding to-be-processed data is acquired according to the address of the weight value.

A convolution operation is executed on the to-be-processed data according to the indicator to obtain a convolution result.

According to a second aspect, the embodiments of the disclosure provide a convolution processing apparatus for a convolutional neural network, which may include:
a classification unit, configured to classify weight values in a sub convolution kernel in the convolutional neural network;
a generation unit, configured to generate, for each of the weight values according to a classification result of the corresponding weight value, an indicator storing a corresponding operation to be executed on data and an address representing the weight value;
an acquisition unit, configured to acquire corresponding to-be-processed data according to the address of the weight value; and
a convolution processing unit, configured to execute a convolution operation on the to-be-processed data according to the indicator to obtain a convolution result.

According to a third aspect, the embodiments of the disclosure provide a computer-readable storage medium, in which a computer-executable instruction may be stored. The computer-executable instruction may be configured to execute the convolution processing method for the convolutional neural network in the abovementioned embodiments.

The embodiments of the disclosure provide the convolution processing method and apparatus for the convolutional neural network, and the storage medium. The method includes the following operations. The weight values in the sub convolution kernel in the convolutional neural network are classified. The indicator storing the corresponding operation to be executed on data and the address representing the weight value are generated for each of the weight values according to the classification result of the corresponding weight value. The corresponding to-be-processed data is acquired according to the address of the weight value. The convolution operation is executed on the to-be-processed data according to the indicator to obtain the convolution result. In such a manner, weight conversion and novel processing units may be combined to fully utilize the sparsity of weights.

### Brief Description of the Drawings

Fig. 1 is a flowchart of a convolution processing method for a convolutional neural network according to embodiment 1 of the disclosure;
Fig. 2A is a flowchart of a convolution processing method for a convolutional neural network according to embodiment 2 of the disclosure;
Fig. 2B is a flowchart of another convolution processing method for a convolutional neural network according to embodiment 2 of the disclosure;
Fig. 2C is a flowchart of another convolution processing method for a convolutional neural network according to embodiment 2 of the disclosure;
Fig. 3 is a flowchart of a convolution processing method for a convolutional neural network according to embodiment 3 of the disclosure;
Fig. 4 is a flowchart of weight class rearrangement according to embodiment 3 of the disclosure;
Fig. 5 is a structure diagram of segmenting an original convolution kernel into sub convolution kernels according to embodiment 3 of the disclosure;
Fig. 6 is a schematic diagram of a generated indicator table and mapping table according to embodiment 3 of the disclosure;
Fig. 7 is a structure diagram of weight table entries after weight rearrangement according to embodiment 3 of the disclosure;
Fig. 8 is a structure diagram of weight table entries after weight rearrangement based on a second manner according to embodiment 3 of the disclosure;
Fig. 9 is a structure diagram of weight table entries after weight rearrangement based on a third manner according to embodiment 3 of the disclosure;
Fig. 10 is a structure diagram of weight table entries after weight rearrangement based on a fourth manner according to embodiment 3 of the disclosure;
Fig. 11 is a schematic diagram of a convolution processing structure for a convolutional neural network according to embodiment 3 of the disclosure;
Fig. 12 is a schematic diagram of another convolution processing structure for a convolutional neural network according to embodiment 3 of the disclosure;
Fig. 13 is a schematic diagram of another convolution processing structure for a convolutional neural network according to embodiment 3 of the disclosure; and
Fig. 14 is a composition structure diagram of a convolution processing apparatus for a convolutional neural network according to embodiment 4 of the disclosure.

### Detailed Description of the Embodiments

For making the purposes, solutions and advantages of the embodiments of the disclosure clearer, specific solutions of the disclosure will further be described below in combination with the drawings in the embodiments of the disclosure in detail. The following embodiments are adopted not to limit the scope of the disclosure but to describe the disclosure.

In the embodiments of the disclosure, a novel processing unit structure is provided. Compared with a multiply-add structure of a conventional processing unit, splitting the processing unit into a class accumulation unit and a class multiplication unit is higher in extensibility and can support functions such as a calculation early termination function, a clock gating function, and a zero-data calculation termination function. Through weight conversion, an appropriate conversion strategy may be selected according to a structural characteristic of a neural network. Weight conversion and the novel processing unit may be combined to fully utilize the sparsity of weights. Through the embodiments of the disclosure, by use of the sparsity of the weights, a neural network hardware accelerator and processor may reduce the calculation burden, reduce the processing time and improve the efficiency.

### Embodiment 1

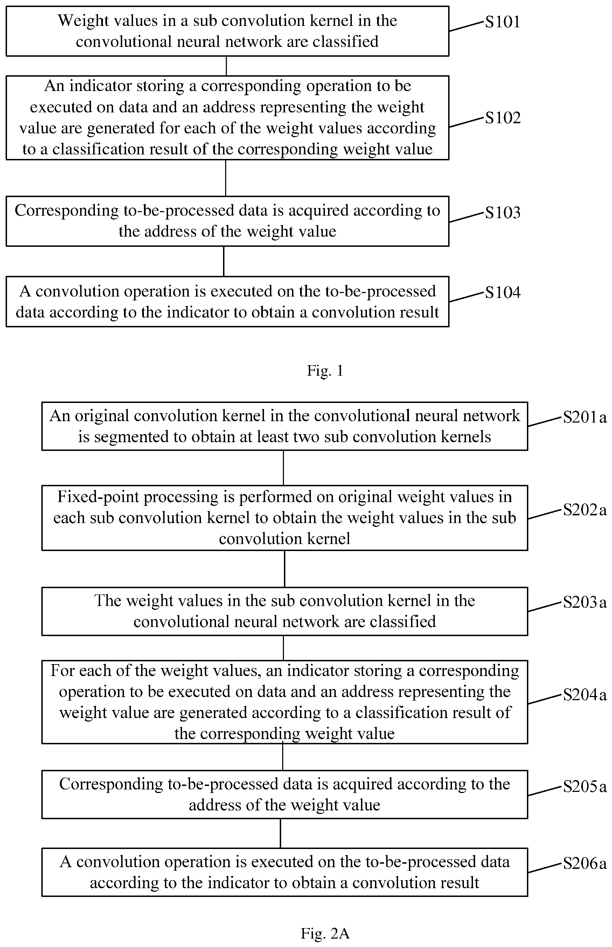

The embodiment of the disclosure provides a convolution processing method for a convolutional neural network. Fig. 1 is a flowchart of a convolution processing method for a convolutional neural network according to embodiment 1 of the disclosure. As shown in Fig. 1, the method includes the following operations.

In S101, weight values in a sub convolution kernel in the convolutional neural network are classified.

Herein, the sub convolution kernel in the convolutional neural network is classified according to a preset strategy, the weight values are rearranged according to a classification result, and the rearranged weight values are correspondingly converted.

In another embodiment, the operation that the weight values in the sub convolution kernel in the convolutional neural network are classified may be implemented in the following manners. For example, the same weight values in the sub convolution kernel are classified as the same class; or, the weight values with the same absolute value are classified as the same class; or, the weight values that are multiples of powers of 2 are classified as the same class; or, positive weight values and negative weight values are classified as two classes respectively.

Herein, taking classifying the same weight values in the sub convolution kernel as the same class as an example, in the embodiment of the disclosure, only the same weight values in the sub convolution kernel are classified as the same class, and only the same weight values are arranged together. If a column width, row width and channel number of the sub convolution kernel are R, S and C respectively and there are 256 classes of weight values in total, according to a solution in the existing art, RxSxC multiply-add operations are required. However, in the embodiment of the disclosure, at most RxSxC+256 add operations and 256 multiply operations are required only. In another embodiment, the weight classes may also be reduced to 64 or less in a merging manner of merging the positive and negative weight values with the same absolute values or merging the weights that are multiples of powers of 2, or the positive weights and the negative weights are merged separately, the positive weight class is arranged before the negative weight class, and an indicator table and mapping table obtained after rearrangement are stored in a global cache.

In S102, for each of the weight values, an indicator storing a corresponding operation to be executed on data and an address representing the weight value are generated according to a classification result of the corresponding weight value.

Herein, the weight values may be converted into a corresponding indicator table and mapping table according to a class rearrangement result of the weight values. The indicator table is used for storing the indicators of the corresponding operations to be executed on the data. The mapping table is configured to represent the addresses of the weight values.

In the embodiment of the disclosure, the indicator table is used for storing the indicators of the corresponding operations corresponding to the weight values of all classes, each indicator corresponds to a class of weight values, and the mapping table corresponding to each indicator stores the addresses corresponding to all the weight values in the class of weight values. The operation corresponding to the indicator includes the weight value, an ending address, a shift value, an add/subtract type, extension information and a class indication. The mapping table includes the address of the weight value, i.e., parameters representing a row number, column number and channel serial number corresponding to the weight value.

In S103, corresponding to-be-processed data is acquired according to the address of the weight value.

Herein, there is a corresponding relationship between the address of the weight value and an address of the to-be-processed data, and the corresponding to-be-processed data may be acquired according to the corresponding relationship. The to-be-processed data may be an image, running data of a vehicle, language data and the like.

In S104, a convolution operation is executed on the to-be-processed data according to the indicator to obtain a convolution result.

Herein, since the indicator includes the weight value, the ending address, the shift value, the add/subtract type, the extension information and the class indication, corresponding processing such as shifting or an add/subtract operation may be performed on the to-be-processed data according to the operation in the indicator.

In the embodiment of the disclosure, non-zero compression is performed on the weights by weight conversion, so that time of the convolution operation is only correlated with the number of non-zero weights, the sparsity of a weighted convolution kernel is fully utilized, and the inferencing operation time is greatly saved.

### Embodiment 2

The embodiment of the disclosure provides a convolution processing method for a convolutional neural network. Fig. 2A is a flowchart of a convolution processing method for a convolutional neural network according to embodiment 2 of the disclosure. As shown in Fig. 2A, the method includes the following operations.

In S201a, an original convolution kernel in the convolutional neural network is segmented to obtain at least two sub convolution kernels.

Herein, taking performing weight conversion by use of a compiler as an example, an iterative operation may be executed through the compiler to segment a convolution kernel with a size of RxSxCH into multiple RxSxC sub convolution kernels (R is a column width of the convolution kernel, S is a row width of the convolution kernel, C is a channel number of the sub convolution kernel, and if a channel number of a convolution kernel of a present layer is Ch, C<=Ch).

In S202a, fixed-point processing is performed on original weight values in each sub convolution kernel to obtain the weight values in the sub convolution kernel.

In S203a, the weight values in the sub convolution kernel in the convolutional neural network are classified.

Herein, the sub convolution kernel in the convolutional neural network is classified according to a preset strategy, the weight values are rearranged according to a classification result, and the rearranged weight values are correspondingly converted.

In S204a, for each of the weight values, an indicator storing a corresponding operation to be executed on data and an address representing the weight value are generated according to a classification result of the corresponding weight value.

Herein, the weight values may be converted into a corresponding indicator table and mapping table according to a class rearrangement result of the weight values. The indicator in the indicator table is used for storing the corresponding operation to be executed on the data. The mapping table is configured to represent the addresses of the weight values.

In the embodiment of the disclosure, the indicator table is used for storing the indicators of the corresponding operations corresponding to the weight values of all classes, each indicator corresponds to a class of weight values, and the mapping table corresponding to each indicator stores the addresses corresponding to all the weight values in the class of weight values. The operation corresponding to the indicator includes the weight value, an ending address, a shift value, an add/subtract type, extension information and a class indication. The mapping table includes the address of the weight value, i.e., parameters representing a row number, column number and channel serial number corresponding to the weight value.

In S205a, corresponding to-be-processed data is acquired according to the address of the weight value.

Herein, there is a corresponding relationship between the address of the weight value and an address of the to-be-processed data, and the corresponding to-be-processed data may be acquired according to the corresponding relationship.

In S206a, a convolution operation is executed on the to-be-processed data according to the indicator to obtain a convolution result.

Herein, since the indicator includes the weight value, the ending address, the shift value, the add/subtract type, the extension information and the class indication, corresponding processing such as shifting or an add/subtract operation may be performed on the to-be-processed data according to the operation in the indicator.

In another embodiment, the operation that the corresponding to-be-processed data is acquired according to the address of the weight value includes that: a to-be-processed data set the same as the sub convolution kernel in row width, column width and channel number is determined from an input original to-be-processed data set; a corresponding relationship between an address of each piece of to-be-processed data in the to-be-processed data set and the address of the corresponding weight value in the sub convolution kernel is established; and the to-be-processed data corresponding to the address in the to-be-processed data set is acquired according to the corresponding relationship.

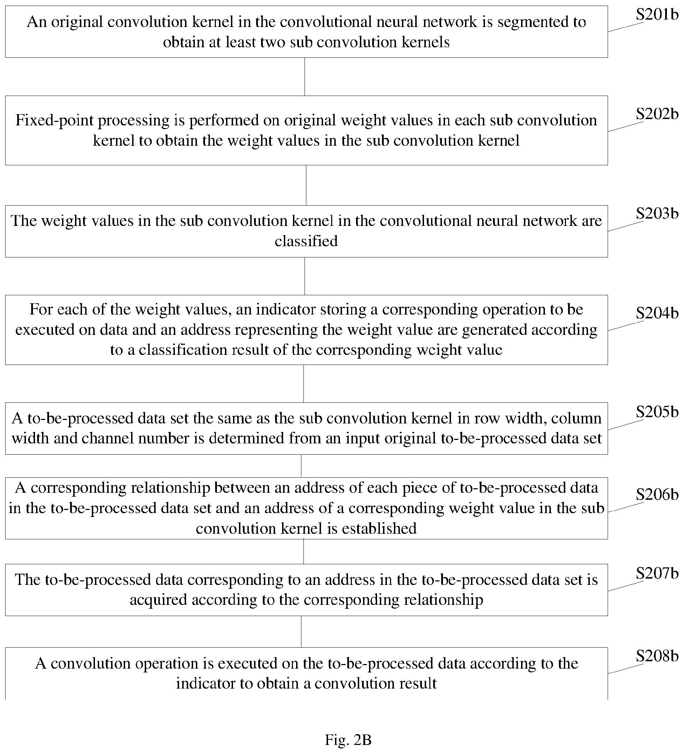

Fig. 2B is a flowchart of another convolution processing method for a convolutional neural network according to embodiment 2 of the disclosure. As shown in Fig. 2B, the method includes the following operations.

In S201b, an original convolution kernel in the convolutional neural network is segmented to obtain at least two sub convolution kernels.

In S202b, fixed-point processing is performed on original weight values in each sub convolution kernel to obtain the weight values in the sub convolution kernel.

In S203b, the weight values in the sub convolution kernel in the convolutional neural network are classified.

In S204b, for each of the weight values, an indicator storing a corresponding operation to be executed on data and an address representing the weight value are generated according to a classification result of the corresponding weight value.

In S205b, a to-be-processed data set the same as the sub convolution kernel in row width, column width and channel number is determined from an input original to-be-processed data set.

Herein, the original to-be-processed data set is a set of all to-be-processed data. In the embodiment of the disclosure, it is necessary to acquire a corresponding to-be-processed data set from the original to-be-processed data set, a row width, column width and channel number of the to-be-processed data set being the same as a row width, column width and channel number of the sub convolution kernel.

In S206b, a corresponding relationship between an address of each piece of to-be-processed data in the to-be-processed data set and an address of a corresponding weight value in the sub convolution kernel is established.

Herein, each piece of to-be-processed data in the to-be-processed data set forms a one-to-one corresponding relationship with the corresponding weight value in the sub convolution kernel, and the address of a corresponding piece of to-be-processed data may be acquired according to an address of a certain weight value in the sub convolution kernel.

In S207b, the to-be-processed data corresponding to an address in the to-be-processed data set is acquired according to the corresponding relationship.

Herein, the address of a corresponding piece of to-be-processed data may be acquired according to an address of a certain weight value in the sub convolution kernel, and then the corresponding to-be-processed data may be determined according to the address.

In S208b, a convolution operation is executed on the to-be-processed data according to the indicator to obtain a convolution result.

In another embodiment, the operation that the convolution operation is executed on the to-be-processed data according to the indicator to obtain the convolution result includes that: a cumulative sum of all the to-be-processed data corresponding to all the weight values in each class of weight values is acquired according to the indicator; the cumulative sum is multiplied by the corresponding weight value to obtain a partial sum; and all partial sums corresponding to all classes of weight values are added to obtain the convolution result.

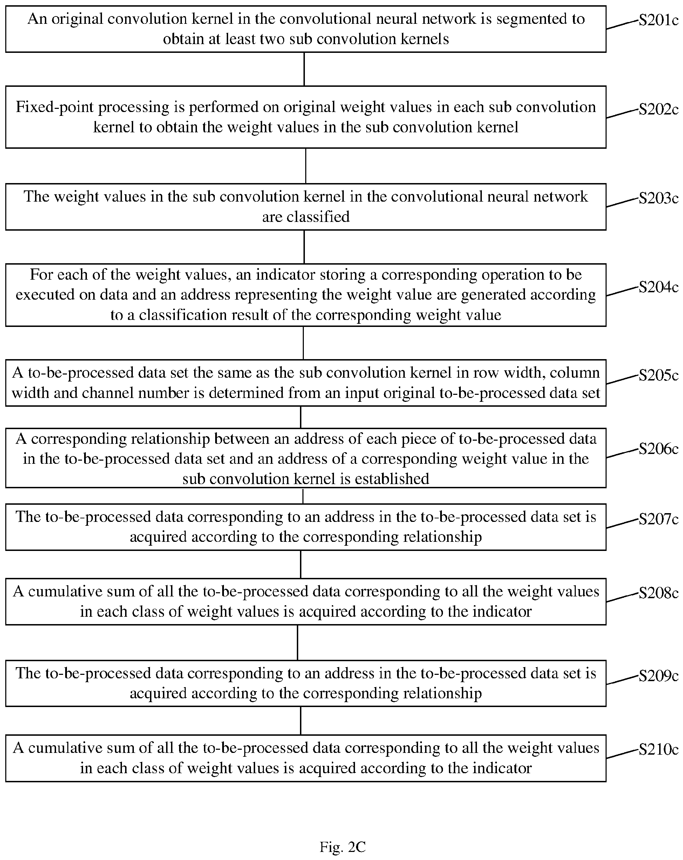

Fig. 2C is a flowchart of another convolution processing method for a convolutional neural network according to embodiment 2 of the disclosure. As shown in Fig. 2C, the method includes the following operations.

In S201c, an original convolution kernel in the convolutional neural network is segmented to obtain at least two sub convolution kernels.

In S202c, fixed-point processing is performed on original weight values in each sub convolution kernel to obtain the weight values in the sub convolution kernel.

In S203c, the weight values in the sub convolution kernel in the convolutional neural network are classified.

In S204c, for each of the weight values, an indicator storing a corresponding operation to be executed on data and an address representing the weight value are generated according to a classification result of the corresponding weight value.

Herein, the weight values may be converted into a corresponding indicator table and mapping table according to a class rearrangement result of the weight values. The indicator table is used for storing the indicators of the corresponding operations to be executed on the data. The mapping table is configured to represent the addresses of the weight values.

In the embodiment of the disclosure, the indicator table is used for storing the indicators of the corresponding operations corresponding to the weight values of all classes, each indicator corresponds to a class of weight values, and the mapping table corresponding to each indicator stores the addresses corresponding to all the weight values in the class of weight values. The operation corresponding to the indicator includes the weight value, an ending address, a shift value, an add/subtract type, extension information and a class indication. The mapping table includes the address of the weight value, i.e., parameters representing a row number, column number and channel serial number corresponding to the weight value.

In S205c, a to-be-processed data set the same as the sub convolution kernel in row width, column width and channel number is determined from an input original to-be-processed data set.

In S206c, a corresponding relationship between an address of each piece of to-be-processed data in the to-be-processed data set and an address of a corresponding weight value in the sub convolution kernel is established.

Herein, there is a corresponding relationship between the address of the weight value and an address of the to-be-processed data, and the corresponding to-be-processed data may be acquired according to the corresponding relationship.

In S207c, the to-be-processed data corresponding to an address in the to-be-processed data set is acquired according to the corresponding relationship.

In S208c, a cumulative sum of all the to-be-processed data corresponding to all the weight values in each class of weight values is acquired according to the indicator.

In the embodiment of the disclosure, when a mapping table corresponding to the same indicator is read, a class accumulation unit of a processing unit performs calculation preprocessing and/or an add/subtract operation. When the mapping table corresponding to the same indicator is read, namely when an ending condition of the same weight is not reached, calculation preprocessing, i.e., a shifting operation and the add/subtract operation, is performed in the class accumulation unit of the processing unit according to different implementation strategies, i.e., weight rearrangement strategies. A shift is determined by a configuration in the indicator table, and add/subtract is determined by the configuration in the indicator table. When the mapping table corresponding to the same indicator is completely read, a class end mark is checked, and if the class end mark is NOT ENDED, the next indicator is read. When the mapping table corresponding to the same indicator is completely read, the class end mark is checked, and if the class end mark is ENDED, an add/subtract result, the corresponding weight values and a serial number of the class accumulation processing unit are sent to a class multiply-add processing unit. Meanwhile, the next indicator, i.e., the indicator corresponding to the next class of weight values, is read, an accumulated value in a class accumulation processor is cleared until the class end mark in the indicator table indicates that accumulation operations over the to-be-processed data corresponding to all the classes of weight values are completed.

In another embodiment, the operation that the cumulative sum of all the to-be-processed data corresponding to all the weight values in each class of weight values is acquired according to the indicator includes that: all the to-be-processed data corresponding to all the weight values in each class of weight values is preprocessed according to the indicator; and the cumulative sum of all the to-be-processed data that is preprocessed is acquired, wherein the to-be-processed data is not equal to zero.

Herein, preprocessing may be the shifting operation, and a specific shift value is acquired from a shift value in the indicator.

In S209c, the cumulative sum is multiplied by the corresponding weight value to obtain a partial sum.

In another embodiment, the operation that the cumulative sum is multiplied by the corresponding weight value to obtain the partial sum includes that: if it is determined that the cumulative sum is more than or equal to a preset offset value, the cumulative sum is multiplied by the corresponding weight value to obtain the partial sum; and if it is determined that the cumulative sum is less than the preset offset value, a convolution operation is terminated.

In S210c, all partial sums corresponding to all classes of weight values are added to obtain a convolution result.

In another embodiment, a difference value between each partial sum and the preset offset value is determined; if it is determined that the difference value between the partial sum and the preset offset value is more than or equal to zero, all the partial sums corresponding to all the classes of weight values are added to obtain the convolution result; and if it is determined that the difference value between the partial sum and the preset offset value is less than zero, the convolution operation is terminated.

In another embodiment, a corresponding operation of the convolution operation is controlled through a clock gating signal, a clock gating function may be triggered by taking a weight class ending point as an enable signal, and the gating function is disabled at other times.

In the embodiment of the disclosure, non-zero compression is performed on the weights by weight conversion, so that time of the convolution operation is only correlated with the number of non-zero weights, the sparsity of a weighted convolution kernel is fully utilized, and the inferencing operation time is greatly saved. In addition, the novel processing unit structure is higher in extensibility and can support functions such as a calculation early termination function, a clock gating function, and a zero-data calculation termination function, namely the calculation burden may further be reduced by use of the sparsity of the data and the power consumption may be reduced by clock gating.

### Embodiment 3

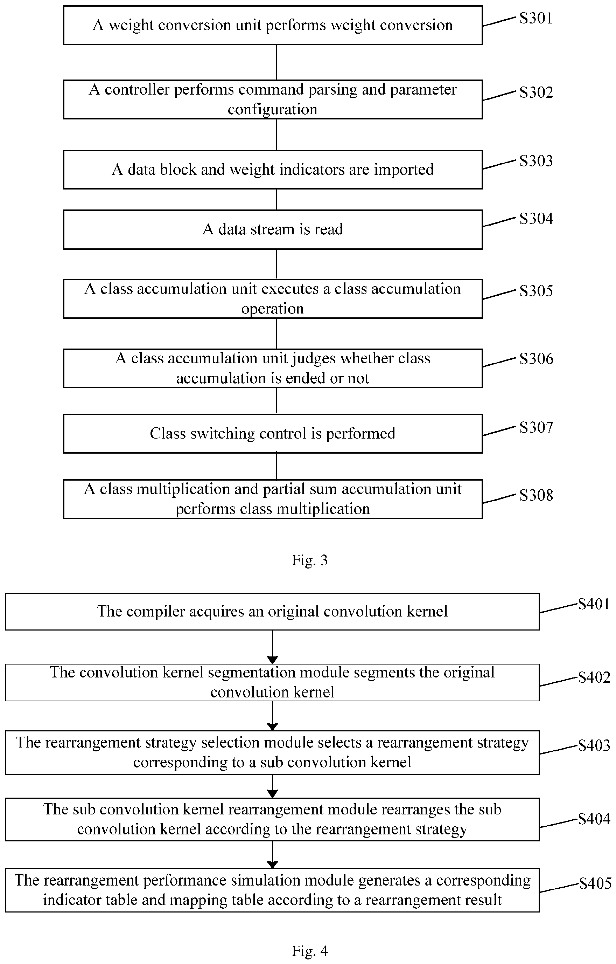

The embodiment of the disclosure provides a convolution processing method for a convolutional neural network. Fig. 3 is a flowchart of a convolution processing method for a convolutional neural network according to embodiment 3 of the disclosure. As shown in Fig. 3, the method includes the following operations.

In S301, a weight conversion unit performs weight conversion.

Herein, the weight conversion unit may be responsible for segmenting and rearranging a convolution kernel through a tool such as a software compiler and a script file or manually and simulating a processing unit to segment and rearrange the convolution kernel in an exemplary manner, and an indicator table and mapping table obtained after rearrangement are stored in a global cache.

In the embodiment of the disclosure, weights are converted through the compiler or the script or manually. Taking performing weight conversion by use of the compiler as an example, an iterative operation is executed through the compiler to segment a convolution kernel with a size of RxSxCH into multiple RxSxC sub convolution kernels (R is a column width of the convolution kernel, S is a row width of the convolution kernel, C is a channel number of the sub convolution kernel, and if a channel number of a convolution kernel of a present layer is Ch, C<=Ch), weight values obtained by fixed-point processing in each sub convolution kernel are rearranged, and the rearranged weights are converted into forms of an indicator table and a mapping table.

Fig. 4 is a flowchart of weight class rearrangement according to embodiment 3 of the disclosure. In the embodiment of the disclosure, weight conversion is performed by use of a compiler. The compiler is internally divided into a convolution kernel segmentation module, a rearrangement strategy selection module, a sub convolution kernel rearrangement module and a rearrangement performance simulation module. As shown in Fig. 4, weight class rearrangement includes the following operations.

In S401, the compiler acquires an original convolution kernel.

In S402, the convolution kernel segmentation module segments the original convolution kernel.

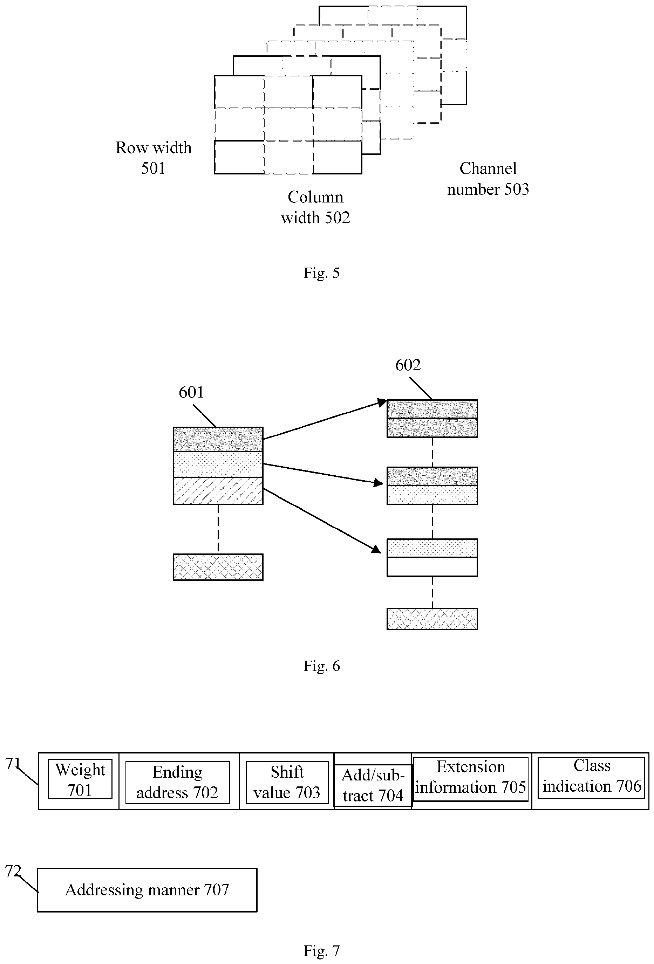

Herein, the original convolution kernel is segmented through the convolution kernel segmentation module to form sub convolution kernels. Fig. 5 is a structure diagram of segmenting an original convolution kernel into sub convolution kernels according to embodiment 3 of the disclosure. Fig. 5 shows multiple sub convolution kernels obtained by segmenting the original convolution kernel and a row width 501, column width 502 and channel number 503 of each sub convolution kernel.

In S403, the rearrangement strategy selection module selects a rearrangement strategy corresponding to a sub convolution kernel.

In S404, the sub convolution kernel rearrangement module rearranges the sub convolution kernel according to the rearrangement strategy.

In S405, the rearrangement performance simulation module generates a corresponding indicator table and mapping table according to a rearrangement result.

Fig. 6 is a schematic diagram of a generated indicator table and mapping table according to embodiment 3 of the disclosure. As shown in Fig. 6, an indicator table 601 forms a corresponding association relationship with a mapping table 602. Fig. 7 is a structure diagram of weight table entries after weight rearrangement according to embodiment 3 of the disclosure. As shown in Fig. 7, an indicator table 71 is used for storing a weight value 701, an ending address 702, a shift value 703, an add/subtract type 704, extension information 705 and a class indication 706. A mapping table 72 represents an addressing manner 707 for a row, column and channel number of a weight. The addressing manner may be represented by L (iwx, jwx, kwx), and L (iwx, jwx, kwx) represents the addressing manner for the row, the column and the channel number, where iwx represents a row number corresponding to a weight wx and is valued to a range (0, R-1), jwx represents a column number corresponding to the weight wx and is valued to the range (0, R-1), and kwx represents a channel serial number corresponding to the weight wx and is valued to the range (0, R-1), R being a column width of a sub convolution kernel.

In another embodiment, the weights may also be converted through a compiled script or a manual operation, etc.

In the embodiment of the disclosure, different rearrangement strategies may be selected, and each rearrangement strategy corresponds to a rearrangement mode. These rearrangement strategies are described by taking weights subjected to 8Bit fixed-point processing as an example.

A first manner is strategy-free rearrangement, and an early termination function is not enabled.

In the embodiment of the disclosure, the same weights are rearranged together. If there are 256 weights and a convolution kernel corresponding to the weights has a column width R, a row width S and a channel number C, through the embodiment of the disclosure, originally required RxSxC multiply-add operations may be replaced with at most RxSxC+256 add operations and 256 multiply operations after conversion.

A second manner is strategy-free rearrangement, and the early termination function is enabled.

In the embodiment of the disclosure, only the same weights are rearranged together, positive weights are arranged at first, and then negative weights are arranged. If there are 256 weights and a convolution kernel corresponding to the weights has a column width R, a row width S and a channel number C, through the embodiment of the disclosure, originally required RxSxC multiply-add operations may be replaced with at most RxSxC+256 add operations and 256 multiply operations after conversion, and meanwhile, when a cumulative sum obtained by convolution calculation is less than an offset, a convolution operation may be terminated early.

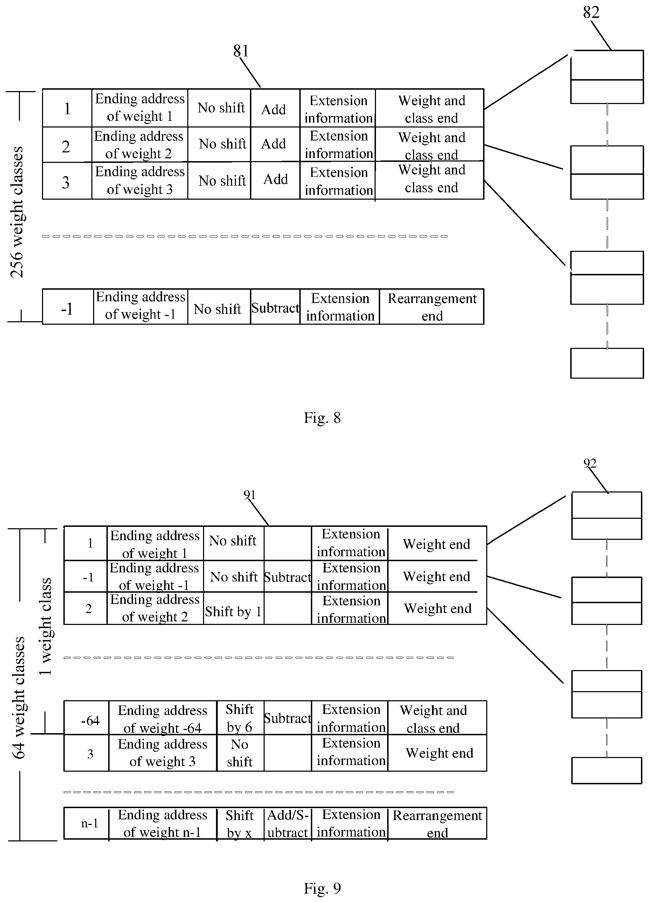

Fig. 8 is a structure diagram of weight table entries after weight rearrangement based on a second manner according to embodiment 3 of the disclosure. As shown in Fig. 8, each row in an indicator table 81 indicates an indicator corresponding to a weight class. The first row includes weight value 1, ending address, i.e., ending address of weight 1, no shift, add operation, extension information and weight and class end indication. The second row includes weight value 2, ending address, i.e., ending address of weight 2, no shift, add operation, extension information and weight and class end indication. The third row includes weight value 3, ending address, i.e., ending address of weight 3, no shift, add operation, extension information and weight and class end indication. The fourth row includes weight value -1, ending address, i.e., ending address of weight -1, no shift, subtract operation, extension information and rearrangement end indication. A mapping table 82 represents addresses of weight values of each class of weights corresponding to each indicator.

A third manner is class reduction preferred rearrangement, and the early termination function is not enabled.

In the embodiment of the disclosure, weight classes may be reduced to 64 or less in a merging manner of merging positive and negative weight values with the same absolute value and merging weights that are multiples of powers of 2. Taking reducing the weight classes to 64 as an example, under this condition, the convolution early termination function is not enabled. If a convolution kernel corresponding to the weights has a column width R, a row width S and a channel number C, through the embodiment of the disclosure, originally required RxSxC multiply-add operations may be replaced with at most RxSxC+64 add operations and 64 multiply operations after conversion.

Fig. 9 is a structure diagram of weight table entries after weight rearrangement based on a third manner according to embodiment 3 of the disclosure. As shown in Fig. 9, each row in an indicator table 91 indicates an indicator corresponding to a weight class. The first row includes weight value 1, ending address, i.e., ending address of the weight 1, no shift, add operation, extension information and weight end indication. The second row includes weight value -1, ending address, i.e., ending address of weight -1, no shift, subtract operation, extension information and weight end indication. The third row includes weight value 2, ending address, i.e., ending address of weight 2, shift by 1, add operation, extension information and weight end indication. The fourth row includes weight value -64, ending address, i.e., ending address of weight -64, shift by 6, subtract operation, extension information and weight end indication. The fifth row includes weight value 3, ending address, i.e., ending address of weight 3, no shift, add operation, extension information and weight end indication. The sixth row includes weight value n-1, ending address, i.e., ending address of weight n-1, shift by x, add/subtract operation, extension information and rearrangement end indication. A mapping table 92 represents addresses of weight values of each class of weights corresponding to each indicator.

A fourth manner: the early termination function is enabled, and the classes are merged as much as possible.

In the embodiment of the disclosure, the positive weights and the negative weights are merged separately, and the positive weight class is arranged before the negative weight class. Compatibility of characteristics of the two functions may be achieved. However, the utilization rate of multiplication for weight rearrangement in this manner is higher than the utilization rate of multiplication in the third manner.

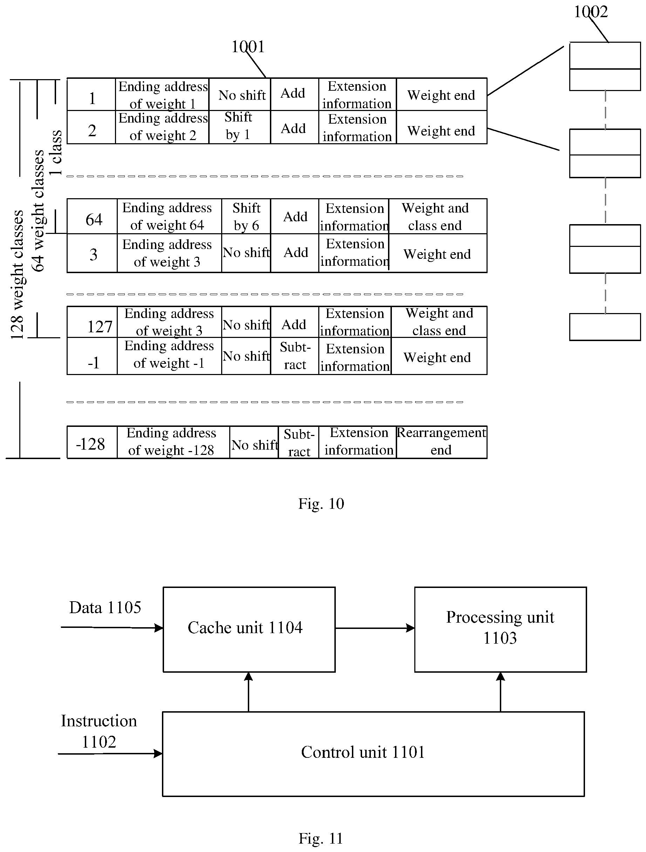

Fig. 10 is a structure diagram of weight table entries after weight rearrangement based on a fourth manner according to embodiment 3 of the disclosure. As shown in Fig. 10, each row in an indicator table 1001 indicates an indicator corresponding to a weight class. The first row includes weight value 1, ending address, i.e., ending address of the weight 1, no shift, add operation, extension information and weight end indication. The second row includes weight value 2, ending address, i.e., ending address of weight 2, shift by 1, add operation, extension information and weight end indication. The third row includes weight value 64, ending address, i.e., ending address of weight 64, shift by 6, add operation, extension information and weight and class end indication. The fourth row includes weight value 3, ending address, i.e., ending address of weight 3, no shift, add operation, extension information and weight end indication. The fifth row includes weight value 127, ending address, i.e., ending address of weight 127, no shift, add operation, extension information and weight and class end indication. The sixth row includes weight value -1, ending address, i.e., ending address of weight -1, no shift, subtract operation, extension information and weight end indication. The seventh row includes weight value -128, ending address, i.e., ending address of weight -128, no shift, subtract operation, extension information and rearrangement end indication. A mapping table 1002 represents addresses of weight values of each class of weights corresponding to each indicator.

In S302, a controller performs command parsing and parameter configuration.

Herein, Fig. 11 is a schematic diagram of a convolution processing structure for a convolutional neural network according to embodiment 3 of the disclosure. As shown in Fig. 11, a controller in a control unit 1101, after parsing an instruction 1102, performs parameter configuration on a processing unit 1103, and selects an input data block from data 1105 in a global cache in a cache unit 1104 to implement function parameter configuration of the processing unit.

In S303, a data block and weight indicators are imported.

Herein, for a scheduling execution of a processing unit, data that is the same as a sub convolution kernel obtained by segmentation in size, i.e., the column width is R, the row width is S and the channel number is C (RxSxC), is read from the global cache and stored in a data cache (R is the column width of the sub convolution kernel, S is the row width of the sub convolution kernel, and C is the channel number of the sub convolution kernel). Weight indicators of the sub convolution kernel required to be processed are read to an indicator cache from the global cache.

In S304, a data stream is read.

Herein, mapping table contents after weight rearrangement are sequentially read, and data is read from an internal cache of the processor by taking the mapping table contents as addresses or selection conditions. In the embodiment of the disclosure, the controller of the processing unit reads a first indicator to the controller, then sequentially reads mapping table contents after weight rearrangement and reads data from the data cache by taking the mapping table contents as addresses/selection conditions.

In S305, a class accumulation unit executes a class accumulation operation.

Herein, the class accumulation unit mainly completes an accumulation operation for a certain weight class, and also supports a zero-data skipping operation.

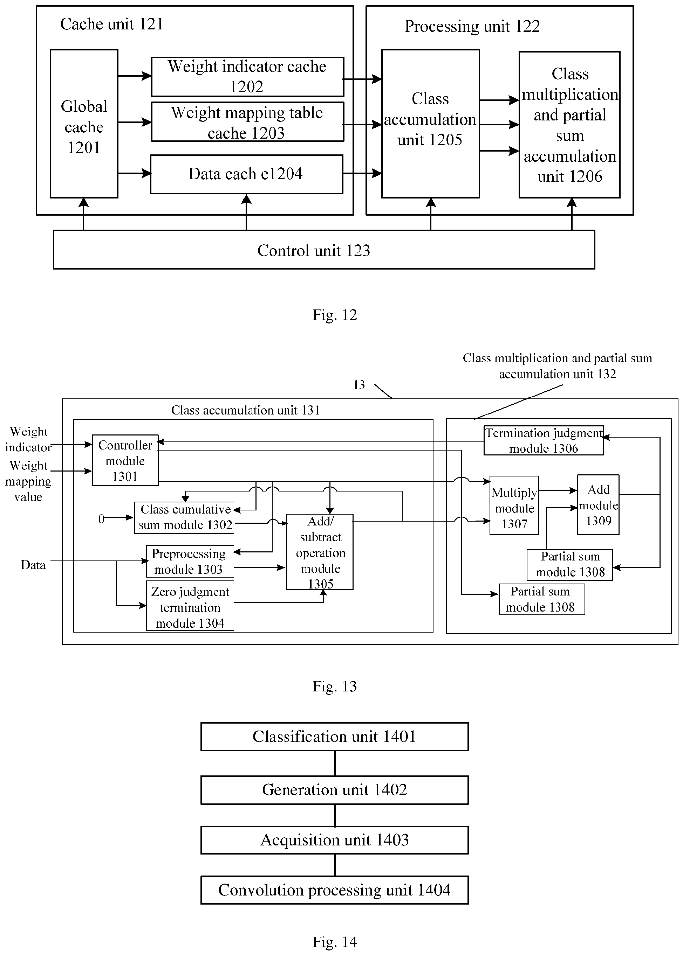

In the embodiment of the disclosure, when mapping table entries corresponding to the same indicator table entry are read, the class accumulation unit of the processing unit performs calculation preprocessing and/or an add/subtract operation. Fig. 12 is a schematic diagram of another convolution processing structure for a convolutional neural network according to embodiment 3 of the disclosure. As shown in Fig. 12, a cache unit includes a global cache 1201, a weight indicator cache 1202, a weight mapping table cache 1203 and a data cache 1204. A processing unit 122 includes a class accumulation unit 1205 and a class multiplication and partial sum accumulation unit 1206. A control unit 123 is configured to receive and send a control instruction for controlling each unit.

In another embodiment, Fig. 13 is a schematic diagram of another convolution processing structure for a convolutional neural network according to embodiment 3 of the disclosure. As shown in Fig. 13, a processing unit 13 includes a class accumulation unit 131 and a class multiplication and partial sum accumulation unit 132. The class accumulation unit 131 includes a controller module 1301, a class cumulative sum module 1302, a preprocessing module 1303, a zero judgment termination module 1304 and an add/subtract operation module 1305. The class accumulation unit 131 of the processing unit 13 performs calculation preprocessing and an add/subtraction operation. The class accumulation unit 131 of the processing unit 13 performs calculation preprocessing, i.e., a shifting operation and the add/subtract operation, according to different implementation strategies, i.e., weight rearrangement strategies. A shift is determined by a configuration in the indicator table. The add/subtract operation is determined by the configuration in the indicator table. When input data is 0, the add/subtract operation is suspended or terminated. The class multiplication and partial sum accumulation unit 132 is configured to complete a multiply operation over a cumulative sum output by the class accumulation unit 131 and a corresponding weight and accumulate a multiplication result to a partial sum, and also supports a clock gating function and an early termination function.

In S306, a class accumulation unit judges whether class accumulation is ended or not.

Herein, when mapping table entries corresponding to the same indicator table entry are completely read, a class end mark is checked. If the class end mark is NOT ENDED, the next indicator table entry is read, and S305 is repeated.

In S307, class switching control is performed.

Herein, when mapping table entries corresponding to the same indicator are completely read, the class end mark is checked. If the class end mark is ENDED, an add/subtract result, a corresponding weight value and the serial number of the class accumulation processing unit are sent to the class multiplication processing unit. Meanwhile, the next indicator table entry is read, an accumulated value in the class accumulation processor is cleared, and the operation of S305 is restarted until the class end mark in the indicator table entry indicates that the whole convolution operation is completed.

In S308, a class multiplication and partial sum accumulation unit performs class multiplication.

Herein, the class multiplication and partial sum accumulation unit mainly completes the multiply operation over the cumulative sum output by the class accumulation unit and the corresponding weight and accumulates the multiplication result to the partial sum, and also supports the clock gating function and the early termination function.

In the embodiment of the disclosure, the class multiplication processing unit completes the multiply operation over the input weight and data and accumulates the multiplication result to the partial sum. If whether the operation can be terminated early or not is selected to be judged in the configuration, it is judged whether a difference value between a value of a present partial sum and an offset value is less than 0 or not, and if the difference value between the value of the present partial sum and the offset value is less than 0, a judgment result is fed back to the controller of the processing unit and processing is stopped.

Clock gating takes a weight class ending point after rearrangement as an enable signal, and a clock may be turned off at other times. Whether the class multiplication unit can terminate the operation early or not is configured according to different implementation solutions provided in S301. If the early termination function is enabled, whether the difference value between the value of the present partial sum and the offset value is less than 0 or not, and if the difference value between the value of the present partial sum and the offset value is less than 0, the judgment result is fed back to the controller of the processing unit and processing is stopped. If the function is not enabled, the partial value and the offset value are not judged.

In the embodiment of the disclosure, an apparatus for implementing a sparse convolutional neural network includes the weight conversion unit, the cache unit, the control unit and the processing unit.

The weight conversion unit may be responsible for segmenting and rearranging the convolution kernel through a tool such as a software compiler and a script file or manually and simulating the processing unit to segment and rearrange the convolution kernel in the exemplary manner, and the indicator table and mapping table obtained after rearrangement are stored in the global cache.

The processing unit is divided into two parts: the class accumulation unit and the class multiplication and partial sum accumulation part.

The class accumulation unit is configured to complete the accumulation operation for a certain weight class, and also supports the zero-data skipping operation.

The class multiplication and partial sum accumulation unit is configured to complete the multiply operation over the partial sum output by the class accumulation unit and the corresponding weight and accumulate the multiplication result to the partial sum, and also supports the clock gating function and the early termination function.

The cache unit may be of a single-level structure or a multilevel cache structure. A two-level cache is taken as an example.

The global cache provides a scheduling, i.e., data, weight indicator table and weight mapping table required by the convolution operation of the sub convolution kernel, for the data cache, the weight indicator cache and the weight mapping cache.

The weight mapping cache sends a weight mapping table value to the data cache as an address of the data cache, reads data at a corresponding position and sends it to the class accumulation unit.

The weight indicator cache sends an indicator to the class accumulation unit to control an internal operation of the class accumulation unit and judge whether the operation result of the class accumulation unit is required to be sent to the class multiplication unit for continuous calculation or not.

In the embodiment of the disclosure, weight conversion and the novel processing unit are combined to perform non-zero compression on the weights, so that time of the convolution operation is only correlated with the number of non-zero weights, the sparsity of a weighted convolution kernel is fully utilized, and the inferencing operation time is greatly saved. In addition, the novel processing unit structure is higher in extensibility and can support functions such as a calculation early termination function, a clock gating function, and a zero-data calculation termination function, namely the calculation burden may further be reduced by use of the sparsity of the data and the power consumption may be reduced by clock gating.

### Embodiment 4

Based on the abovementioned embodiments, the embodiment of the disclosure provides a convolution processing apparatus for a convolutional neural network. Each unit of the apparatus and each subunit of each unit may be implemented through a processor of a computing device, and of course, may also be implemented through a logical circuit. In an implementation process, the processor may be a Central Processing Unit (CPU), a Micro Processing Unit (MPU), a Digital Signal Processor (DSP) or a Field Programmable Gate Array (FPGA), etc. The computer device may be a mobile phone, a notebook computer, a desktop computer and a server.

Fig. 14 is a composition structure diagram of a convolution processing apparatus for a convolutional neural network according to embodiment 4 of the disclosure. As shown in Fig. 14, the apparatus includes:
a classification unit 1401, configured to classify weight values in a sub convolution kernel in the convolutional neural network;
a generation unit 1402, configured to generate, for each of the weight values according to a classification result of the corresponding weight value, an indicator storing a corresponding operation to be executed on data and an address representing the weight value;
an acquisition unit 1403, configured to acquire corresponding to-be-processed data according to the address of the weight value; and
a convolution processing unit 1404, configured to execute a convolution operation on the to-be-processed data according to the indicator to obtain a convolution result.

In another embodiment, the apparatus further includes:
a segmentation unit, configured to segment an original convolution kernel in the convolutional neural network to obtain at least two sub convolution kernels; and
a fixed-point processing unit, configured to perform fixed-point processing on original weight values in each sub convolution kernel to obtain the weight values in the sub convolution kernel.

In another embodiment, the acquisition unit is further configured to:
determine, from an input original to-be-processed data set, a to-be-processed data set the same as the sub convolution kernel in column width, row width and channel number;
establish a corresponding relationship between an address of each piece of to-be-processed data in the to-be-processed data set and the address of the corresponding weight value in the sub convolution kernel; and
acquire the to-be-processed data corresponding to an address in the to-be-processed data set according to the corresponding relationship.

In another embodiment, the convolution processing unit is further configured to:
acquire a cumulative sum of all the to-be-processed data corresponding to all the weight values in each class of weight values according to the indicator;
multiply the cumulative sum by the corresponding weight value to obtain a partial sum; and
add all partial sums corresponding to all classes of weight values to obtain the convolution result.

In another embodiment, the convolution processing unit is further configured to:
preprocess all the to-be-processed data corresponding to all the weight values in each class of weight values according to the indicator; and acquire the cumulative sum of all the to-be-processed data that is preprocessed, wherein the to-be-processed data is not equal to zero.

In another embodiment, the convolution processing unit is further configured to:
if it is determined that the cumulative sum is more than or equal to a preset offset value, multiply the cumulative sum by the corresponding weight value to obtain the partial sum.

In another embodiment, the convolution processing unit is further configured to:
determine a difference value between each partial sum and the preset offset value; and
if it is determined that the difference value between the partial sum and the preset offset value is more than or equal to zero, add all the partial sums corresponding to all the classes of weight values to obtain the convolution result.

In another embodiment, the classification unit is further configured to:
classify the same weight values in the sub convolution kernel as the same class; or,
classify the weight values with the same absolute value as the same class; or,
classify the weight values that are multiples of powers of 2 as the same class; or,
classify positive weight values and negative weight values as two classes respectively.

It is to be noted that, in the embodiments of the disclosure, when implemented in form of a software function unit and sold or used as an independent product, the convolution processing method for the convolutional neural network may also be stored in a computer-readable storage medium. Based on such an understanding, the solutions of the embodiments of the disclosure substantially or parts making contributions to a conventional art may be embodied in form of a software product. The computer software product is stored in a storage medium, including a plurality of instructions configured to enable a computer device to execute all or part of the apparatus in each embodiment of the disclosure. The storage medium includes various media capable of storing program codes such as a U disk, a mobile hard disk, a Read Only Memory (ROM), a magnetic disk or an optical disk. Therefore, the embodiments of the disclosure are not limited to any specific hardware and software combination.

Correspondingly, an embodiment of the disclosure provides a computer-readable storage medium, in which a computer program is stored. The computer program is executed by a processor to implement the operations of the convolution processing method for the convolutional neural network in any embodiment.

Correspondingly, an embodiment of the disclosure provides a computer device, which includes a memory and a processor. The memory stores a computer program capable of running in the processor. The processor executes the program to implement the operations of the convolution processing method for the convolutional neural network in any embodiment.

The descriptions about the device embodiment of the disclosure are similar to the descriptions about the apparatus embodiment, and beneficial effects of the device embodiment of the disclosure are also the same as those of the apparatus embodiment. Implementing details undisclosed in the device embodiment of the disclosure are understood with reference to the descriptions about the apparatus embodiment of the disclosure.

It is also to be pointed out here that the descriptions about the embodiments of the storage medium and the device are similar to the descriptions about the apparatus embodiment, and beneficial effects of the embodiments of the storage medium and the device are also the same as those of the apparatus embodiment. Implementing details undisclosed in the embodiments of the storage medium and the device can be understood with reference to the descriptions about the apparatus embodiment of the disclosure.

Of course, there are also some other similar protocol interaction implementation cases for the apparatus in the embodiments of the disclosure. Those skilled in the art may make various corresponding variations and transformations according to the embodiments of the disclosure without departing from the spirit and essence of the disclosure, but these corresponding variations and transformations shall fall within the scope of protection of the appended claims of the apparatus of the disclosure.

Those skilled in the art should know that the embodiment of the disclosure may be provided as an apparatus, a system or a computer program product. Therefore, the disclosure may adopt a form of pure hardware embodiment, pure software embodiment and combined software and hardware embodiment. Moreover, the disclosure may adopt a form of computer program product implemented in at least one computer-available storage medium (including, but not limited to, a disk memory and an optical memory) including computer-available program codes.

The disclosure is described with reference to flowcharts and/or block diagrams of the apparatus, device (system) and computer program product according to the embodiment of the disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that a device for realizing a function specified in one flow or more flows in the flowcharts and/or one block or more blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing device, so that a series of operating operations are executed on the computer or the other programmable data processing device to generate processing implemented by the computer, and operations for realizing the function specified in one flow or many flows in the flowcharts and/or one block or many blocks in the block diagrams are provided by the instructions executed on the computer or the other programmable data processing device.

It is to be understood that "an embodiment" or "one embodiment" mentioned throughout the specification means inclusion of specific features, structures or characteristics related to the embodiment in at least one embodiment of the disclosure. Therefore, "in an embodiment" or "in one embodiment" appearing in the whole specification does not always refer to the same embodiment. In addition, these specific features, structures or characteristics may be combined in at least one embodiment appropriately. It is to be understood that, in each embodiment of the disclosure, a magnitude of a sequence number of each process does not mean an execution sequence and the execution sequence of each process should be determined by its function and an internal logic and should not form any limit to an implementation process of the embodiments of the disclosure. The sequence numbers of the embodiments of the disclosure are only adopted for description and do not represent superiority-inferiority of the embodiments.

It is to be noted that, in the disclosure, terms "include" and "contain" or any other transformations thereof are intended to cover nonexclusive inclusions such that a process, apparatus, object or device including a series of elements not only includes those elements but also includes other elements that are not clearly listed or further includes elements intrinsic to the process, the apparatus, the object or the device. Under the condition of no more limitations, an element limited by a statement "including a/an......" does not exclude existence of another identical element in a process, apparatus, object or device including the element.

In the embodiments provided in the application, it is to be understood that the disclosed device and apparatus may be implemented in other manners. The device embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the disclosure may be integrated into a processing unit, each unit may also serve as an independent unit and two or more than two units may also be integrated into a unit. The integrated unit may be implemented in a hardware form and may also be implemented in form of a combination of hardware and a software functional unit.

Those of ordinary skill in the art should know that all or part of the operations of the apparatus embodiment may be implemented by instructing related hardware through a program, the program may be stored in a computer-readable storage medium, and the program is executed to execute the operations of the apparatus embodiment. The storage medium includes: various media capable of storing program codes such as a mobile storage device, a ROM, a magnetic disk or an optical disk.

Or, when implemented in form of a software function unit and sold or used as an independent product, the integrated unit of the disclosure may also be stored in a computer-readable storage medium. Based on such an understanding, the solutions of the embodiments of the disclosure substantially or parts making contributions to a conventional art may be embodied in form of a software product. The computer software product is stored in a storage medium, including a plurality of instructions configured to enable a server to execute all or part of the apparatus in each embodiment of the disclosure. The storage medium includes various media capable of storing program codes such as a mobile storage device, a ROM, a magnetic disk or an optical disk.

The above is only the implementation mode of the disclosure and not intended to limit the scope of protection of the disclosure. Any variations or replacements apparent to those skilled in the art within the scope disclosed by the disclosure shall fall within the scope of protection of the disclosure. Therefore, the scope of protection of the disclosure shall be subject to the scope of protection of the claims.

### Industrial Applicability

As mentioned above, the convolution processing method and apparatus for the convolutional neural network and storage medium in the embodiments of the disclosure have the following beneficial effect: weight conversion and the novel processing unit may be combined to fully utilize the sparsity of weights.

## Claims

1. A convolution processing method for a convolutional neural network, comprising:
classifying weight values in a sub convolution kernel in the convolutional neural network;
generating, for each of the weight values according to a classification result of the corresponding weight value, an indicator storing a corresponding operation to be executed on data and an address representing the weight value;
acquiring corresponding to-be-processed data according to the address of the weight value; and
executing a convolution operation on the to-be-processed data according to the indicator to obtain a convolution result.

2. The method according to claim 1, further comprising:
segmenting an original convolution kernel in the convolutional neural network to obtain at least two sub convolution kernels; and
performing fixed-point processing on original weight values in each sub convolution kernel to obtain the weight values in the sub convolution kernel.

3. The method according to claim 1 or 2, wherein acquiring the corresponding to-be-processed data according to the address of the weight value comprises:
determining, from an input original to-be-processed data set, a to-be-processed data set the same as the sub convolution kernel in column width, row width and channel number;
establishing a corresponding relationship between an address of each piece of to-be-processed data in the to-be-processed data set and the address of the corresponding weight value in the sub convolution kernel; and
acquiring the to-be-processed data corresponding to the address in the to-be-processed data set according to the corresponding relationship.

4. The method according to claim 3, wherein executing the convolution operation on the to-be-processed data according to the indicator to obtain the convolution result comprises:
acquiring a cumulative sum of all the to-be-processed data corresponding to all the weight values in each class of weight values according to the indicator;
multiplying the cumulative sum by the corresponding weight value to obtain a partial sum; and
adding all partial sums corresponding to all classes of weight values to obtain the convolution result.

5. The method according to claim 4, wherein acquiring the cumulative sum of all the to-be-processed data corresponding to all the weight values in each class of weight values according to the indicator comprises:
preprocessing all the to-be-processed data corresponding to all the weight values in each class of weight values according to the indicator; and acquiring the cumulative sum of all the to-be-processed data that is preprocessed, wherein the to-be-processed data is not equal to zero.

6. The method according to claim 4, wherein multiplying the cumulative sum by the corresponding weight value to obtain the partial sum comprises:
if it is determined that the cumulative sum is more than or equal to a preset offset value, multiplying the cumulative sum by the corresponding weight value to obtain the partial sum.

7. The method according to claim 4, wherein adding all the partial sums corresponding to all the classes of weight values to obtain the convolution result comprises:
determining a difference value between each partial sum and the preset offset value; and
if it is determined that the difference value between the partial sum and the preset offset value is more than or equal to zero, adding all the partial sums corresponding to all the classes of weight values to obtain the convolution result.

8. The method according to claim 1, wherein classifying the weight values in the sub convolution kernel in the convolutional neural network comprises:
classifying the same weight values in the sub convolution kernel as the same class; or,
classifying the weight values with the same absolute value as the same class; or,
classifying the weight values that are multiples of powers of 2 as the same class; or,
classifying positive weight values and negative weight values as two classes respectively.

9. A convolution processing apparatus for a convolutional neural network, comprising:
a classification unit, configured to classify weight values in a sub convolution kernel in the convolutional neural network;
a generation unit, configured to generate, for each of the weight values according to a classification result of the corresponding weight value, an indicator storing a corresponding operation to be executed on data and an address representing the weight value;
an acquisition unit, configured to acquire corresponding to-be-processed data according to the address of the weight value; and
a convolution processing unit, configured to execute a convolution operation on the to-be-processed data according to the indicator to obtain a convolution result.

10. A computer-readable storage medium, in which a computer-executable instruction is stored, wherein the computer-executable instruction is configured to execute the convolution processing method for the convolutional neural network according to any one of claims 1-8.
